# FASCICULE DE BREVET EUROPEEN

(11) **EP 2 957 384 B1**
(45) Date de publication et mention de la délivrance du brevet: **31.07.2019**
(21) Numéro de dépôt: 15172092.7
(22) Date de dépôt: 15.06.2015
(51) Int. Cl.: B23Q 7/12, B23Q 15/22, B23Q 17/20, G05B 19/418, B07C 5/00

(54) **INSTALLATION D'USINAGE ET PROCÉDÉ ASSOCIÉ**
BEARBEITUNGSSYSTEM UND ENTSPRECHENDES VERFAHREN
MACHINING INSTALLATION AND ASSOCIATED METHOD

(30) Priorité: 16.06.2014 FR 1455478
(43) Date de publication de la demande: 23.12.2015
(73) Titulaire: Centre Technique des Industries Mécaniques et du Décolletage, 74300 Cluses (FR)
(72) Inventeur: LAURENT, Patrice, 74250 Viuz en Sallaz (FR); BUSI, Roger, 74800 Saint Laurent (FR); GOLDSCHMIDT, Ephraïm, 68480 Biederthal (FR)
(74) Mandataire: Croonenbroek, Thomas Jakob

(56) Documents cités:
- EP-A2- 1 048 994
- WO-A1-2008/012490
- CH-A5- 665 144
- DE-A1-102008 007 906
- FR-A1- 2 243 051

## Description

La présente invention se situe dans le domaine de l'usinage et plus particulièrement dans le domaine de l'usinage en automatique ou dans celui du décolletage.

Plus spécifiquement, l'invention s'applique de façon générale à toute sorte d'installations d'usinage comprenant une machine - outil à commande numérique et une unité d'alimentation en matière première comme par exemple un embarreur pour alimenter en matière à usiner la machine-outil.

La machine-outil peut être configurée pour l'usinage de tout matériau par enlèvement de matière : le tournage, le perçage, le fraisage, le filetage, le taraudage, le fonçage, le chariotage.

EP1048994A2 décrit une installation d'usinage comprenant une machine-outil, une unité d'alimentation en matière première à usiner, disposée en amont de ladite machine-outil, un dispositif robotisé de transfert des pièces usinées en sortie de ladite machine-outil, disposé en aval de ladite machine-outil, au moins un espace de stockage tampon, au moins une unité de contrôle des pièces usinées en sortie de ladite machine-outil, l'espace de stockage tampon et l'unité de contrôle des pièces usinées étant disposés dans le rayon d'action dudit dispositif robotisé de transfert, et une unité de commande reliée à ladite unité de contrôle des pièces usinées, à ladite machine-outil et au dispositif robotisé de transfert, ladite unité de commande étant configurée pour commander le transfert des pièces usinées par le dispositif robotisé de transfert vers ledit espace de stockage tampon, commander le transfert d'une pièce usinée par le dispositif robotisé de transfert dudit espace de stockage tampon vers ladite unité de contrôle des pièces usinées, modifier au moins un paramètre d'usinage de ladite machine-outil en fonction d'un défaut d'une pièce usinée, relevé par ladite unité de contrôle des pièces usinées, évacuer les pièces usinées de l'espace tampon en fonction d'un résultat de mesure de ladite unité de contrôle vers un espace de stockage final ou vers un espace de stockage des rebuts.

Dans l'objectif de réduire les coûts de fabrication, on fait fonctionner des installations d'usinage de façon de plus en plus autonome en réduisant toute intervention d'un opérateur, voire même sans opérateur présent sur les lieux d'usinage.

A cet effet, un dispositif d'alimentation de la machine-outil en matière à usiner avec un magasin de barres ou de lopins est installé en amont de la machine-outil de façon à alimenter celle-ci en continu avec des barres ou lopins métalliques à usiner.

Toutefois, même si la machine-outil a été initialisée et programmée au départ pour sortir des pièces conformes, au début de la fabrication, il faut faire un certain nombre d'essais et des ajustements de réglage avant que la machine-outil ne puisse fabriquer à une cadence élevée des pièces conformes.

De plus, au cours de la fabrication par exemple d'un lot de pièces, les conditions de fabrication peuvent se dégrader, par exemple par une usure prématurée des outils de coupe, de sorte qu'après un certain temps de fabrication, les pièces usinées ne sont plus conformes en regard des dimensions, des défauts géométriques ou des états de surface attendus.

Si on s'aperçoit trop tard de la non-conformité des pièces usinées, cela revient à devoir mettre éventuellement une grande partie d'un lot au rebut ou alors de soumettre ce lot à des opérations supplémentaires de rectification ou de tri ultérieur, ce qui est très couteux dans tous les cas.

La présente invention vise à pallier au moins partiellement aux inconvénients précités, en proposant une installation d'usinage selon la revendication 1.

L'installation d'usinage selon l'invention peut en outre présenter un ou plusieurs des aspects suivants, pris seul ou en combinaison.

Selon un aspect, l'unité de contrôle des pièces usinées comprend une unité de mesure dimensionnelle, en particulier une machine à mesurer tridimensionnelle, notamment à palpeur.

L'unité de contrôle des pièces usinées peut en outre comprendre une unité de mesure de l'état de surface.

Selon un autre aspect, l'installation comprend une station de nettoyage des pièces usinées disposée dans le rayon d'action dudit dispositif robotisé de transfert.

La station de nettoyage des pièces usinées comprend par exemple une machine de lavage de pièces usinées.

Selon un autre aspect la station de nettoyage des pièces usinées comprend une machine d'essorage et/ou de séchage des pièces usinées.

Selon encore un autre aspect, l'unité de commande comprend un processeur à coeur temps réel.

Le dispositif robotisé de transfert peut comprendre un bras articulé robotisé muni d'une extrémité de préhension des pièces usinées.

L'espace de stockage tampon est dimensionné de manière à contenir au moins autant de pièces que ladite machine-outil peut usiner lors d'un contrôle par ladite unité de contrôle.

L'unité d'alimentation en matière première à usiner comprend par exemple un embarreur de convoyage de la matière à usiner sous forme de barres de matière ou de lopins.

L'invention concerne également un procédé d'usinage selon la revendication 11.

Selon un aspect le procédé comprend en outre une étape de nettoyage précédant l'étape de contrôle et toutes les pièces usinées pendant l'étape de lavage et de contrôle sont stockées dans l'espace de stockage tampon.

Selon encore un autre aspect, l'étape de nettoyage comprend une étape de lavage ou une étape de lavage et d'essorage ou de séchage.

D'autres avantages et caractéristiques apparaîtront à la lecture de la description de l'invention, ainsi que des dessins annexés sur lesquels :
- la figure 1 montre un schéma en perspective d'un premier exemple d'une installation d'usinage selon l'invention,
- la figure 2 est un schéma synoptique simplifiée de l'installation de la figure 1,
- la figure 3 montre un organigramme de fonctionnement de l'installation de la figure 1,
- la figure 4 montre une vue de dessus d'une cellule robotisée d'un second exemple d'une installation d'usinage selon l'invention.

Sur les figures, les éléments identiques sont identifiés par les mêmes références.

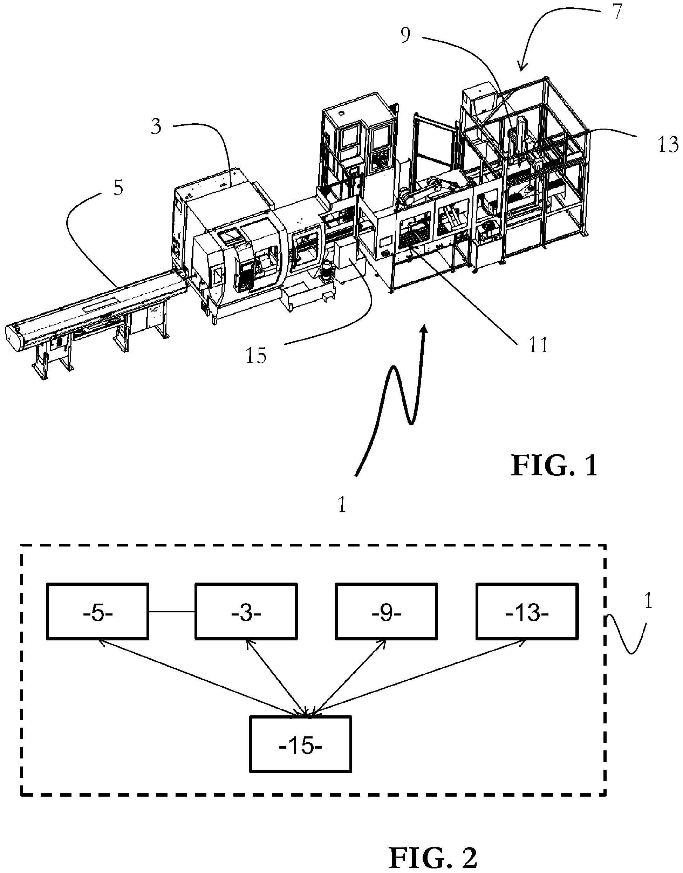

On a représenté sur les figures 1 et 2 une installation d'usinage 1 selon l'invention.

Cette installation d'usinage 1 comprend une machine-outil à commande numérique 3 apte à réaliser divers pièces par usinage en fonction des programmes chargés dans son unité de traitement.

En amont de la machine-outil 3 est disposée une unité 5 d'alimentation en matière première à usiner.

L'unité 5 d'alimentation en matière première à usiner comprend par exemple un embarreur de convoyage de la matière à usiner sous forme de barres de matière. Selon une variante, on peut aussi envisager une unité 5 d'alimentation de la machine-outil 3 sous forme de lopins.

En aval de la machine-outil 3 est disposée une cellule robotisée 7 qui comprend par exemple un dispositif 9 robotisé de transfert des pièces usinées en sortie de ladite machine-outil, au moins un, voire plusieurs espaces 11 de stockage tampon et au moins une unité 13 de contrôle des pièces usinées en sortie de ladite machine-outil 3.

Le dispositif 9 robotisé de transfert comprend par exemple un bras articulé robotisé muni d'une extrémité de préhension des pièces usinées.

L'unité 13 de contrôle des pièces usinées comprend par exemple une unité de mesure dimensionnelle, comme une machine à mesurer tridimensionnelle, notamment à palpeur pour vérifier les cotes de géométrie de la pièce par rapport aux cotes de géométrie définis dans les plans de construction.

L'unité 13 de contrôle des pièces usinées peut comprendre à la place ou en plus de la machine à mesurer tridimensionnelle, une unité de mesure de l'état de surface des pièces usinées.

Comme on le voit sur la figure 1, l'espace 11 de stockage tampon et l'unité 13 de contrôle des pièces usinées sont disposés dans le rayon d'action dudit dispositif 9 robotisé de transfert.

Ainsi, le dispositif 9 robotisé de transfert peut prendre des pièces usinées en sortie de la machine-outil 3 et les transférer vers l'espace 11 de stockage, vers l'unité 13 de contrôle des pièces usinées ou entre l'espace 11 de stockage et l'unité 13 de contrôle des pièces usinées.

L'installation comprend de plus une unité 15 de commande reliée à ladite unité 13 de contrôle des pièces usinées, à ladite machine-outil 3 à commande numérique et au dispositif 9 robotisé de transfert.

Cette unité de commande 15 joue le rôle d'une unité coordinatrice entre ces divers postes de l'installation pour, selon le cas, envoyer des commandes ou pour recevoir des informations, les traiter et en déduire des commandes qui s'imposent (voir figure 2).

Ainsi, elle est configurée entre autres pour commander le transfert des pièces usinées par le dispositif 9 robotisé de transfert dans ledit espace 11 de stockage tampon, pour commander le transfert d'une pièce usinée par le dispositif 9 robotisé de transfert dudit espace 11 de stockage tampon vers l'unité 13 de contrôle des pièces usinées, et aussi pour modifier au moins un paramètre d'usinage de ladite machine-outil 3 en fonction d'un défaut d'une pièce usinée, relevé par ladite unité 13 de contrôle des pièces usinées, et pour évacuer les pièces usinées de l'espace 13 tampon en fonction d'un résultat de mesure de ladite unité 13 de contrôle vers un espace de stockage final ou vers un espace de stockage des rebuts.

A cet effet, l'unité de commande 15 comprend par exemple un ordinateur personnel qui présente un processeur à coeur temps réel afin de traiter en temps réels des actions prioritaires notamment liées à l'usinage, aux mesures et aux transferts des pièces usinées entres les postes. Cette partie « à coeur temps réel » est par exemple directement reliée par un bus de terrain du type « PROFIBUS » (marque déposée), ou par liaison Ethernet, à un automate de commande du dispositif 9 robotisé de transfert, et à une entrée dédiée de la machine-outil 3. Une autre partie de cet ordinateur n'est pas à coeur temps réel et traite en particulier de l'initialisation de l'installation et l'interface avec un opérateur.

Par ailleurs, l'espace 11 de stockage tampon est dimensionné de manière à contenir au moins autant de pièces usinées que ladite machine-outil 3 peut usiner lors d'un contrôle par ladite unité 13 de contrôle ou lors de toute opération par exemple de nettoyage précédent le contrôle et la durée du contrôle même.

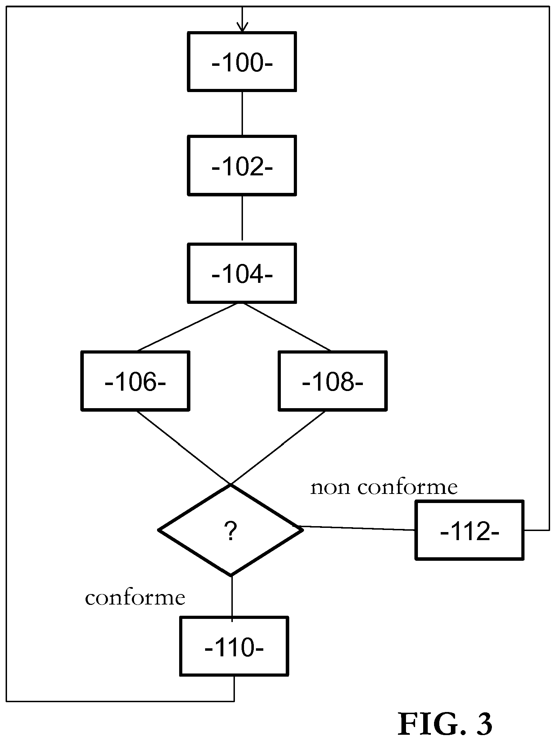

On décrit maintenant le fonctionnement de l'installation
d'usinage 1 au regard de la figure 3.

Au départ, lors d'une étape 100, l'installation est initialisée pour fabriquer des pièces usinées spécifiques. Cela implique par exemple de charger un programme d'usinage dans la machine-outil 3, par exemple via l'unité de commande 15, qui définit toutes les opérations à réaliser, par exemple de chariotage, de coupe, de perçage etc. pour réaliser la pièce.

On veille aussi à ce que l'unité d'alimentation 5 soit chargée par exemple de barres de matière ou de lopins qui servent de matière première pour la fabrication des pièces usinées. Les outils d'usinage sont eux installés dans la machine.

Puis on démarre lors d'une étape 102 l'installation 1 d'usinage et la fabrication de la première pièce.

Une fois que la première pièce usinée est fabriquée, celle-ci est présentée à la sortie de la machine-outil 3 et lors d'une étape 104, on commande le transfert de cette pièce usinée vers ladite unité 13 de contrôle des pièces usinées.

Puis lors d'une étape 106, on contrôle la pièce usinée, par exemple en prenant ses dimensions à l'aide d'une machine de mesure tridimensionnelle.

Pendant ce contrôle de la pièce usinée, on peut continuer en parallèle lors d'une étape 108 de réaliser des pièces usinées et on les transfère dans l'espace 11 de stockage tampon.

Si le contrôle de la pièce usinée démontre la conformité de ladite pièce, celle-ci ainsi que toutes les pièces usinées pendant l'étape de contrôle 106 et stockées dans la l'espace 11 de stockage tampon sont évacuées lors d'une étape 110 vers un espace de stockage final.

On a donc toute de suite fabriqué des pièces conformes et aucun ajustement n'est nécessaire au niveau des paramètres d'usinage de la machine-outil 3.

En revanche, si le contrôle de la pièce usinée démontre la non-conformité de ladite pièce usinée, celle-ci ainsi que toutes les pièces usinées pendant l'étape de contrôle 106 et stockées dans l'espace 11 de stockage tampon sont évacuées lors d'une étape 112 vers un espace de stockage de rebut. Dans un autre cas de figure, les pièces usinées pendant l'étape de contrôle 106 et stockées dans l'espace 11 de stockage tampon sont transférées à la machine de contrôle puis rebutées que si elles n'ont pas démontré leur conformité.

En même temps, l'unité de commande 15 reçoit depuis l'unité 13 de contrôle les résultats de mesure et traite ces informations en temps réel pour modifier le ou les paramètres d'usinage, plus spécifiquement les correcteurs CN de ladite machine-outil 3 qui s'imposent en fonction du défaut constaté lors du contrôle.

Puis le procédé commence à nouveau dès le début et les pièces usinées sont contrôlées à des intervalles réguliers tout au long du processus d'usinage d'un lot de matière première.

On comprend donc qu'un défaut peut rapidement être détecté et des contre-mesures peuvent être prises de façon très rapide et efficace.

A l'aide de cette installation d'usinage, on produit plus rapidement des pièces conformes et lors de la fabrication d'un lot important, un défaut peut être rectifié plus vite. De plus, le nombre de pièces usinées à mettre éventuellement au rebut peut être limité et ainsi les pertes de fabrication peuvent être contenues.

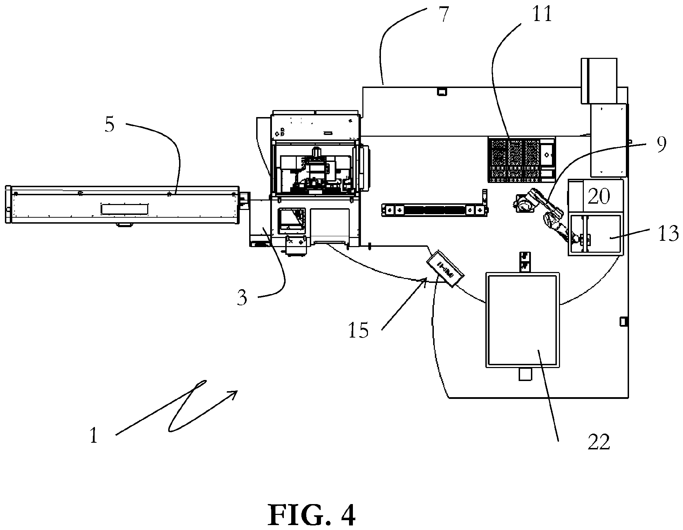

La figure 4 montre un schéma en vue de dessus d'un autre mode de réalisation d'une cellule robotisée 7 d'une installation 1 d'usinage selon l'invention.

Cette cellule robotisée 7 de la figure 4 se distingue de celle de la figure 1 essentiellement par le fait qu'elle comprend plus de postes desservis par le dispositif 9 robotisé de transfert.

Ainsi, l'installation 1 de la figure 4 comprend en outre une station de nettoyage 20 des pièces usinées disposée dans le rayon d'action dudit dispositif 9 robotisé de transfert.

Cette station de nettoyage 20 des pièces usinées comprend par exemple une machine de lavage de pièces usinées, une machine d'essorage, ou encore une machine de séchage des pièces usinées. On peut également prévoir un poste d'imagerie 22 pour le contrôle des pièces.

L'installation de la figure 4 fonctionne essentiellement de la même façon que celle de la figure 1, sauf que l'on peut, si cela s'impose en fonction des pièces fabriquées, faire précéder l'étape de contrôle 106 d'une étape de nettoyage. Dans ce cas, toutes les pièces usinées pendant l'étape de nettoyage et de contrôle sont stockées dans l'espace 11 de stockage tampon. Bien entendu, en fonction des besoins, l'étape de nettoyage peut comprendre une étape de lavage ou une étape de lavage et d'essorage.

D'autres variantes sont possibles sans sortir du cadre de la présente invention.

Ainsi, l'unité 13 de contrôle peut comprendre plusieurs postes différents pour permettre par exemple le contrôle des cotes de géométrie et le contrôle de l'état de surface.

On peut aussi équiper la cellule d'un système de caméra pour visionner la pièce pour le contrôle et pour permettre un posage correct lors de chacune des manipulations de ladite pièce.

De plus, peut envisager de fabriquer au cours d'un même lot de matière première des pièces de forme et/ou de dimensions différentes, ces différentes pièces étant stockées dans des espaces de stockage tampon dédiés.

On comprend donc que l'installation selon l'invention permet une fabrication autonome de pièces usinées conformes en diminuant les éventuels rebuts.

## Revendications

1. Installation (1) d'usinage, comprenant :
- une machine-outil (3) à commande numérique,
- une unité (5) d'alimentation en matière première à usiner, disposée en amont de ladite machine-outil (3) à commande numérique,
- un dispositif (9) robotisé de transfert des pièces usinées en sortie de ladite machine-outil (3), disposé en aval de ladite machine-outil (3),
- au moins une unité (13) de contrôle des pièces usinées en sortie de ladite machine-outil (3), l'espace (11) de stockage tampon et l'unité (13) de contrôle des pièces usinées étant disposés dans le rayon d'action dudit dispositif (9) robotisé de transfert,
- au moins un espace (11) de stockage tampon dimensionné de manière à contenir au moins autant de pièces que ladite machine-outil (9) peut usiner lors d'un contrôle d'une pièce usinée par ladite unité (13) de contrôle, et
- une unité (15) de commande reliée à ladite unité (13) de contrôle des pièces usinées, à ladite machine-outil (3) et au dispositif (9) robotisé de transfert, ladite unité (15) de commande étant configurée pour
∘ commander le transfert d'une pièce usinée par le dispositif (9) robotisé de transfert dudit espace (11) de stockage tampon vers ladite unité (13) de contrôle des pièces usinées,
∘ commander le transfert des pièces usinées au cours d'un contrôle de ladite pièce usinée dans l'unité (13) de contrôle par le dispositif (9) robotisé de transfert vers ledit espace (11) de stockage tampon,
∘ modifier au moins un paramètre d'usinage de ladite machine-outil (3) en fonction d'un défaut d'une pièce usinée, relevé par ladite unité (13) de contrôle des pièces usinées,
∘ évacuer la pièce usinée contrôlée ainsi que toutes les pièces usinées pendant l'étape de contrôle et stockées dans l'espace (11) de stockage tampon vers un espace de stockage final si le contrôle de la pièce usinée par l'unité (13) de contrôle démontre la conformité de ladite pièce ou vers un espace de stockage des rebuts si le contrôle de la pièce usinée par l'unité (13) de contrôle démontre la non-conformité de ladite pièce.

2. Installation d'usinage selon la revendication 1, **caractérisée en ce que** l'unité (15) de contrôle des pièces usinées comprend une unité de mesure dimensionnelle.

3. Installation d'usinage selon la revendication 2, **caractérisée en ce que** l'unité de mesure dimensionnelle comprend une machine à mesurer tridimensionnelle, notamment à palpeur.

4. Installation d'usinage selon la revendication 1, **caractérisée en ce que** l'unité (13) de contrôle des pièces usinées comprend une unité de mesure de l'état de surface.

5. Installation d'usinage selon l'une quelconque des revendications 1 à 4, **caractérisée en ce qu'**elle comprend une station (20) de nettoyage des pièces usinées disposée dans le rayon d'action dudit dispositif (9) robotisé de transfert.

6. Installation d'usinage selon la revendication 5, **caractérisée en ce que** la station (20) de nettoyage des pièces usinées comprend une machine de lavage de pièces usinées.

7. Installation d'usinage selon la revendication 6, **caractérisée en ce que** la station (20) de nettoyage des pièces usinées comprend une machine d'essorage ou de séchage des pièces usinées.

8. Installation d'usinage selon l'une quelconque des revendications 1 à 7, **caractérisée en ce que** l'unité (15) de commande comprend un processeur à coeur temps réel.

9. Installation d'usinage selon l'une quelconque des revendications 1 à 8, **caractérisée en ce que** le dispositif (9) robotisé de transfert comprend un bras articulé robotisé muni d'une extrémité de préhension des pièces usinées.

10. Installation d'usinage selon l'une quelconque des revendications 1 à 9, **caractérisée en ce que** l'unité (5) d'alimentation en matière première à usiner comprend un embarreur de convoyage de la matière à usiner sous forme de barres de matière ou de lopins.

11. Procédé d'usinage de pièces avec une installation selon l'une quelconque des revendications 1 à 10, **caractérisé en ce qu'**il comprend les étapes suivantes :
• on commande le transfert d'une pièce usinée vers ladite unité (13) de contrôle des pièces usinées,
• on contrôle la pièce usinée,
• pendant le contrôle de la pièce usinée, on continue en parallèle de réaliser des pièces usinées et on les transfère vers l'espace (11) de stockage tampon,
• si le contrôle de la pièce usinée démontre la conformité de ladite pièce, celle-ci ainsi que toutes les pièces usinées pendant l'étape de contrôle et stockées dans l'espace (11) de stockage tampon sont évacuées vers un espace de stockage final,
• si le contrôle de la pièce usinée démontre la non-conformité de ladite pièce, celle-ci ainsi que toutes les pièces usinées pendant l'étape de contrôle et stockées dans l'espace (11) de stockage tampon sont évacuées vers un espace de stockage de rebut et on modifie au moins un paramètre d'usinage de ladite machine-outil en fonction d'un défaut lors du contrôle.

12. Procédé selon la revendication 11, **caractérisé en ce qu'**il comprend en outre une étape de nettoyage précédant l'étape de contrôle et **en ce que** toutes les pièces usinées pendant l'étape de lavage et de contrôle sont stockées dans l'espace (11) de stockage tampon.

13. Procédé selon la revendication 12, **caractérisé en ce que** l'étape de nettoyage comprend une étape de lavage ou une étape de lavage et d'essorage ou de séchage.

## Patentansprüche

1. Bearbeitungsanlage (1), umfassend:
- eine digital gesteuerte Werkzeugmaschine (3),
- eine Versorgungseinheit (5) für zu bearbeitendem Rohstoff, die stromaufwärts zu der digital gesteuerten Werkzeugmaschine (3) angeordnet ist,
- eine robotergesteuerte Transfervorrichtung (9) der bearbeiteten Werkstücke am Ausgang der Werkzeugmaschine (3), die stromabwärts zur Werkzeugmaschine (3) angeordnet ist,
- mindestens eine Kontrolleinheit (13) der bearbeiteten Werkstücke am Ausgang der Werkzeugmaschine (3), wobei der Pufferspeicherraum (11) und die Kontrolleinheit (13) der bearbeiteten Werkstücke im Aktionsradius der robotergesteuerten Transfervorrichtung (9) angeordnet sind,
- mindestens einen Pufferspeicherraum (11), der derart dimensioniert ist, dass er mindestens ebenso viele Werkstücke, wie die Werkzeugmaschine (9) bearbeiten kann, bei einer Kontrolle eines bearbeiteten Werkstücks durch die Kontrolleinheit (13) enthält, und
- eine Steuereinheit (15), die mit der Kontrolleinheit (13) der bearbeiteten Werkstücke, mit der Werkzeugmaschine (3) und der robotergesteuerten Transfervorrichtung (9) verbunden ist, wobei die Steuereinheit (15) eingerichtet ist, um
∘ den Transfer eines bearbeiteten Werkstücks durch die robotergesteuerte Transfervorrichtung (9) von dem Pufferspeicherraum (11) zu der Kontrolleinheit (13) der bearbeiteten Werkstücke zu steuern,
∘ den Transfer der bearbeiteten Werkstücke während einer Kontrolle des bearbeiteten Werkstücks in der Kontrolleinheit (13) durch die robotergesteuerte Transfervorrichtung (9) zu dem Pufferspeicherraum (11) zu steuern,
∘ mindestens einen Bearbeitungsparameter der Werkzeugmaschine (3) in Abhängigkeit von einem Fehler eines bearbeiteten Werkstücks, der von der Kontrolleinheit (13) der bearbeiteten Werkstücke festgestellt wurde, zu verändern,
∘ das kontrollierte bearbeitete Werkstück sowie alle während des Kontrollschritts bearbeiteten und in dem Pufferspeicherraum (11) gespeicherten Werkstücke zu einem Endspeicherraum zu leiten, wenn die Kontrolle des bearbeiteten Werkstücks durch die Kontrolleinheit (13) die Konformität des Werkstücks zeigt, oder zu einem Abfallspeicherraum zu leiten, wenn die Kontrolle des bearbeiteten Werkstücks durch die Kontrolleinheit (13) die Nicht-Konformität des Werkstücks zeigt.

2. Bearbeitungsanlage nach Anspruch 1, **dadurch gekennzeichnet, dass** die Kontrolleinheit (15) der bearbeiteten Werkstücke eine Dimensionsmesseinheit umfasst.

3. Bearbeitungsanlage nach Anspruch 2, **dadurch gekennzeichnet, dass** die Dimensionsmesseinheit eine Maschine zum dreidimensionalen Messen, insbesondere mit Sensor, umfasst.

4. Bearbeitungsanlage nach Anspruch 1, **dadurch gekennzeichnet, dass** die Kontrolleinheit (13) der bearbeiteten Werkstücke eine Einheit zum Messen des Oberflächenzustands umfasst.

5. Bearbeitungsanlage nach einem der Ansprüche 1 bis 4, **dadurch gekennzeichnet, dass** sie eine Reinigungsstation (20) der bearbeiteten Werkstücke umfasst, die im Aktionsradius der robotergesteuerten Transfervorrichtung (9) angeordnet ist.

6. Bearbeitungsanlage nach Anspruch 5, **dadurch gekennzeichnet, dass** die Reinigungsstation (20) der bearbeiteten Werkstücke eine Maschine zum Waschen von bearbeiteten Werkstücken umfasst.

7. Bearbeitungsanlage nach Anspruch 6, **dadurch gekennzeichnet, dass** die Reinigungsstation (20) der bearbeiteten Werkstücke eine Schleuder- oder Trocknungsmaschine der bearbeiteten Werkstücke umfasst.

8. Bearbeitungsanlage nach einem der Ansprüche 1 bis 7, **dadurch gekennzeichnet, dass** die Steuereinheit (15) einen Echtzeit-Core-Prozessor umfasst.

9. Bearbeitungsanlage nach einem der Ansprüche 1 bis 8, **dadurch gekennzeichnet, dass** die robotergesteuerte Transfervorrichtung (9) einen robotergesteuerten Gelenkarm umfasst, der mit einem Ende zum Ergreifen der bearbeiteten Werkstücke versehen ist.

10. Bearbeitungsanlage nach einem der Ansprüche 1 bis 9, **dadurch gekennzeichnet, dass** die Versorgungseinheit (5) mit zu bearbeitendem Rohstoff einen Stangenlader zur Beförderung des zu bearbeitenden Stoffes in Form von Materialstangen oder Rohlingen umfasst.

11. Bearbeitungsverfahren von Werkstücken mit einer Anlage nach einem der Ansprüche 1 bis 10, **dadurch gekennzeichnet, dass** es die folgenden Schritte umfasst:
• Steuerung des Transfers eines bearbeiteten Werkstücks zu der Kontrolleinheit (13) der bearbeiteten Werkstücke,
• Kontrolle des bearbeiteten Werkstücks,
• während der Kontrolle des bearbeiteten Werkstücks parallel Fortsetzung der Herstellung der bearbeiteten Werkstücke und deren Transfer zum Pufferspeicherraum (11),
• wenn die Kontrolle des bearbeiteten Werkstücks die Konformität des Werkstücks zeigt, werden dieses sowie alle während des Kontrollschritts bearbeiteten und in dem Pufferspeicherraum (11) gespeicherten Werkstücke zu einem Endspeicherraum geleitet,
• wenn die Kontrolle des bearbeiteten Werkstücks die Nicht-Konformität des Werkstücks zeigt, werden dieses sowie alle während des Kontrollschritts bearbeiteten und in dem Pufferspeicherraum (11) gespeicherten Werkstücke zu einem Abfallspeicherraum geleitet, und wird mindestens ein Bearbeitungsparameter der Werkzeugmaschine in Abhängigkeit von einem Fehler bei der Kontrolle verändert.

12. Verfahren nach Anspruch 11, **dadurch gekennzeichnet, dass** es ferner einen Reinigungsschritt vor dem Kontrollschritt umfasst, und dass alle während des Wasch- und Kontrollschritts bearbeiteten Werkstücke in dem Pufferspeicherraum (11) gespeichert werden.

13. Verfahren nach Anspruch 12, **dadurch gekennzeichnet, dass** der Reinigungsschritt einen Schritt des Waschens oder einen Schritt des Waschens und Schleuderns oder Trocknens umfasst.

## Claims

1. Machining installation (1) comprising:
- a machine tool (3) with digital control,
- a unit (5) for supplying raw material to be machined, arranged upstream of said machine tool (3) with digital control,
- a robotic device (9) for transferring machined components at the exit from said machine tool (3), arranged downstream of said machine tool (3),
- at least one unit (13) for checking the machined components at the exit from said machine tool (3), the buffer storage space (11) and the unit (13) for checking the machined components being arranged within the radius of action of said robotic transfer device (9),
- at least one buffer storage space (11) dimensioned such as to contain at least as many components as said machine tool (9) is able to machine at the time of a checking of a machined component by said checking unit (13), and
- a control unit (15) connected to said unit (13) for checking the machined components, to said machine tool (3) and to the robotic transfer device (9), said control unit (15) being configured in order
∘ to control the transfer of a machined component by the robotic transfer device (9) from said buffer storage space (11) towards said unit (13) for checking the machined components,
∘ to control the transfer of the machined components during a checking of said machined component in the checking unit (13) by the robotic transfer device (9) towards said buffer storage space (11),
∘ to modify at least one machining parameter of said machine tool (3) as a function of a defect in a machined component flagged by said unit (13) for checking the machined components, ∘ to evacuate the checked machined component and also all the components machined during the checking step and stored in the buffer storage space (11) towards a final storage space if the checking of the machined component by the checking unit (13) demonstrates compliance of said component or towards a storage space for rejects if the checking of the machined component by the checking unit (13) demonstrates non-compliance of said component.

2. Machining installation according to Claim 1, **characterized in that** the unit (15) for checking the machined components comprises a dimensional measurement unit.

3. Machining installation according to Claim 2, **characterized in that** the dimensional measurement unit comprises a three-dimensional measuring machine, in particular having a touch probe.

4. Machining installation according to Claim 1, **characterized in that** the unit (13) for checking the machined components comprises a unit for measurement of the surface condition.

5. Machining installation according to any one of Claims 1 to 4, **characterized in that** it comprises a station (20) for cleaning the machined components arranged within the radius of action of said robotic transfer device (9).

6. Machining installation according to Claim 5, **characterized in that** the station (20) for cleaning the machined components comprises a machine for washing machined components.

7. Machining installation according to Claim 6, **characterized in that** the station (20) for cleaning the machined components comprises a machine for spin-drying or for drying the machined components.

8. Machining installation according to any one of Claims 1 to 7, **characterized in that** the control unit (15) comprises a real time core processor.

9. Machining installation according to any one of Claims 1 to 8, **characterized in that** the robotic transfer device (9) comprises a robotic articulated arm provided with an end for gripping the machined components.

10. Machining installation according to any one of Claims 1 to 9, **characterized in that** the unit (5) for supplying raw material to be machined comprises a bar feeder for conveying the material to be machined in the form of bars of material or of billets.

11. Method for machining components with an installation according to any one of Claims 1 to 10, **characterized in that** it comprises the following steps:
• the transfer of a machined component towards said unit (13) for checking the machined components is controlled,
• the machined component is checked,
• during checking of the machined component, machined components continue to be produced in parallel and are transferred towards the buffer storage space (11),
• if checking of the machined component demonstrates compliance of said component, the latter and also all the components machined during the checking step and stored in the buffer storage space (11) are evacuated towards a final storage space,
• if checking of the machined component demonstrates non-compliance of said component, the latter and also all the components machined during the checking step and stored in the buffer storage space (11) are evacuated towards a storage space for rejects and at least one machining parameter of said machine tool is modified as a function of a defect during checking.

12. Method according to Claim 11, **characterized in that** it further comprises a cleaning step preceding the checking step and **in that** all the components machined during the washing and checking step are stored in the buffer storage space (11).

13. Method according to Claim 12, **characterized in that** the cleaning step comprises a washing step or a washing and spin-drying or drying step.
